# FASCICULE DE BREVET EUROPEEN

(11) **EP 3 371 818 B1**
(45) Date de publication et mention de la délivrance du brevet: **01.09.2021**
(21) Numéro de dépôt: 16801974.3
(22) Date de dépôt: 02.11.2016
(51) Int. Cl.: H01H 33/57, H02B 13/025, H02B 13/045

(54) **DISPOSITIF DE CONFINEMENT D'UNE FUITE D'UN GAZ AU NIVEAU D'UNE ZONE DE CHANGEMENT DE DIAMETRE D'UN CONDUIT**
VORRICHTUNG ZUR EINDÄMMUNG EINES GASLECKS IN EINER REGION EINES ROHRES MIT EINER VERÄNDERUNG IM DURCHMESSER
DEVICE FOR CONTAINING A GAS LEAK IN A REGION OF A PIPE WITH A CHANGE IN DIAMETER

(30) Priorité: 02.11.2015 FR 1560490
(43) Date de publication de la demande: 12.09.2018
(73) Titulaire: Ircamex, 44300 Nantes (FR)
(72) Inventeur: CHARON, Romain, 44300 Nantes (FR)
(74) Mandataire: Ermeneux, Bertrand
(86) Numéro de dépôt international: PCT/EP2016/076468
(87) Numéro de publication internationale: WO 2017/076930

(56) Documents cités:
- EP-A1- 0 588 709
- FR-A- 1 113 528
- FR-A- 1 341 666
- FR-A1- 3 001 344

## Description

### 1. Domaine de l'invention

Lʹinvention se rapporte au domaine des postes électriques et des disjoncteurs à haute tension mettant en oeuvre un gaz isolant sous pression.

Plus précisément, lʹinvention concerne un dispositif de confinement d'une fuite d'un gaz survenant au niveau au niveau d'une zone de changement de diamètre extérieur d'un conduit dʹun poste électrique à isolation gazeuse ou dʹun disjoncteur à haute tension à isolation gazeuse.

Lʹinvention sʹapplique notamment, mais non exclusivement aux postes électriques de type blindé à cuve métallique ou en polymère, aussi appelés G.I.S. (acronyme anglais de « Gas Insulation Switchgear »), utilisant un gaz à fort pouvoir diélectrique, généralement de lʹhexafluorure de soufre (SF6).

Lʹinvention trouve également une application pour des disjoncteurs à haute tension à gaz isolant.

### 2. État de la technique

Dans les postes blindés ou les disjoncteurs à haute tension, lʹisolation électrique des conducteurs électriques est grandement améliorée en utilisant du SF6 qui forme autour des conducteurs une atmosphère à la rigidité diélectrique élevée et qui est stable en présence dʹun arc électrique.

Le SF6 présente cependant lʹinconvénient dʹêtre un gaz qui contribue fortement à lʹeffet de serre. Cʹest pourquoi on cherche à limiter les fuites de ce gaz dans l'atmosphère.

De nombreuses fuites se déclarent au niveau des brides dʹassemblage des conduits raccordés à lʹenceinte sous pression des postes blindés ou des disjoncteurs à haute tension.

Il est connu de couler une résine dans un moule sur la surface d'un conduit et/ou d'une bride présentant des fuites, qui en durcissant va permettre d'étanchéifier le conduit et/ou la bride.

Un inconvénient de cette technique connue est que sa mise en œuvre est délicate, notamment au niveau d'un conduit sous pression.

Un autre inconvénient de cette technique connue est que la résine ne résiste qu'à des pressions peu élevées.

On a par ailleurs proposé des techniques de confinement d'une fuite à l'aide d'une enceinte rigide.

On connait du document FR 3 001 344 A1 une technique de confinement de fuites au niveau d'un disque de rupture à l'aide d'une enceinte étanche rigide enveloppant la surface extérieure du disque de rupture.

Ces techniques de confinement connues ne peuvent cependant être mises en œuvre que sur des conduits dont le diamètre extérieur ne varie pas.

### 1. Objectifs de l'invention

L'invention a donc notamment pour objectif de pallier les inconvénients de l'état de la technique cités ci-dessus.

Plus précisément, l'invention a pour objectif de fournir une technique de confinement d'une fuite d'un gaz au niveau d'une zone de changement de diamètre d'un conduit présentant deux portions de diamètres extérieurs différents.

Un objectif de l'invention est également de fournir une telle technique de confinement qui protège au moins partiellement le conduit des intempéries.

Un autre objectif de l'invention est de fournir une telle technique qui soit simple à mettre en œuvre, et d'un coût de revient réduit.

Un objectif de l'invention est également de proposer une telle technique qui permette de récupérer et de stocker du gaz s'échappant du point de fuite.

Encore un objectif de l'invention est de fournir une telle technique qui soit fiable et qui ne nécessite pas de maintenance.

### 2. Exposé de l'invention

Ces objectifs, ainsi que d'autres qui apparaîtront par la suite sont atteints à l'aide d'un dispositif de confinement d'une fuite d'un gaz au niveau d'une zone de changement de diamètre extérieur d'un conduit de section
circulaire d'un poste électrique à isolation gazeuse ou d'un disjoncteur à haute tension à isolation gazeuse.

L'invention concerne donc un dispositif permettant de confiner des fuites, ou en d'autres termes d'empêcher le gaz s'échappant du point de fuite de se répandre dans l'atmosphère, au niveau de la jonction de tuyaux de diamètres différents.

Selon l'invention, un tel dispositif de confinement comprend :
- une première bague de transition de diamètre destinée à être montée de façon étanche sur une première portion dudit conduit ;
- une deuxième bague de transition de diamètre destinée à être montée de façon étanche sur une deuxième portion dudit conduit présentant un diamètre extérieur différent de celui de ladite première portion de conduit, ladite deuxième bague de transition de diamètre présentant un diamètre extérieur sensiblement identique à celui de ladite première bague de transition de diamètre ;
- des moyens de capotage destinés à envelopper au moins partiellement ladite zone de changement de diamètre extérieur, configurés de sorte à pouvoir être montés de manière étanche sur le contour annulaire extérieur de ladite première bague de transition et sur le contour annulaire extérieur de ladite deuxième bague de transition ;
- des moyens d'étanchéification de la zone de montage entre ladite première bague de transition de diamètre et ladite première portion dudit conduit, de la zone de montage entre ladite deuxième bague et ladite deuxième portion dudit conduit et de la zone de montage entre lesdits moyens de capotage et lesdites bagues de transition de diamètre.

Ainsi, de façon inédite, l'invention propose d'envelopper la zone de changement de diamètre du conduit en mettant en oeuvre un dispositif de confinement étanche se montant directement sur le conduit sans modifier, ni procéder au démontage du conduit à l'aide de deux bagues de transition de diamètre.

Ce dispositif de confinement permet par ailleurs avantageusement de stocker le gaz s'échappant du point de fuite entre celui-ci et le conduit.

Dans un mode de réalisation particulier de l'invention, lesdits moyens de capotage comprennent un élément tubulaire et deux bagues de jonction, de diamètre intérieur sensiblement égal au diamètre extérieur desdites bagues de transition de diamètre et de diamètre extérieur sensiblement égal au diamètre intérieur dudit élément tubulaire.

On peut ainsi utiliser un élément tubulaire de dimension standardisée et/ou deux bagues de jonction de dimensions standardisées, qui peuvent être produits en série et mis en oeuvre pour confiner des fuites sur différents conduits.

Par ailleurs, en choisissant un élément tubulaire et des bagues de jonction de dimensions adaptées, on peut envelopper le conduit quelles que soient les dimensions radiales maximales de la zone de changement de diamètre.

De façon avantageuse, le diamètre intérieur de l'élément tubulaire est avantageusement supérieur au plus grand diamètre du conduit dans la zone de changement de diamètre (il peut par exemple s'agir du diamètre d'une bride de jonction si les portions de conduits de diamètres différents sont assemblées à l'aide d'une bride), afin de faciliter son montage autour du conduit.

Dans un mode de réalisation particulier de l'invention, lesdits moyens de capotage comprennent un élément tubulaire de diamètre intérieur sensiblement égal au diamètre extérieur desdites bagues de transition de diamètre.

Dans un mode de réalisation particulier de l'invention ledit élément tubulaire est formé de deux demi-coques demi-cylindriques sensiblement identiques.

Dans un mode de réalisation particulier de l'invention, ladite première et/ou ladite deuxième bague de transition de diamètre sont formées de deux demi-bagues sensiblement identiques.

Ainsi, le montage des bagues de transition de diamètre autour du conduit est facilité.

Selon un aspect particulier de l'invention, au moins une desdites bagues de jonction est formée de deux demi-bagues sensiblement identiques.

On facilite ainsi également le montage des bagues de jonction.

Selon un aspect avantageux de l'invention, un dispositif de confinement tel que décrit ci-dessus comprend une vanne de vidange dudit gaz solidarisée auxdits moyens de capotage.

On peut ainsi récupérer et stocker le gaz confiné par le dispositif, afin de le recycler.

Selon un mode de réalisation particulier de l'invention, lesdites bagues de transition de diamètre et/ou lesdits moyens de capotage sont en matière métallique.

Dans des variantes de ce mode de réalisation particulier de l'invention, on peut également prévoir de mettre en œuvre des bagues de transition de diamètre et/ou des moyens de capotage en matière plastique.

Selon un mode de réalisation avantageux de lʹinvention, un dispositif de confinement tel que décrit ci-dessus comprend des moyens de dégazage, de drainage, ou de vidange du volume de la cavité délimitée par le dispositif de confinement et le conduit.

Selon un mode de réalisation particulier de lʹinvention, un dispositif de confinement tel que décrit ci-dessus comprend un capteur de mesure de la pression, de lʹhumidité et/ou de la température.

Ainsi, il est possible de surveiller la concentration et la qualité du gaz confiné à l'intérieur du dispositif dans le temps.

Certains aspects de lʹinvention partent de lʹidée de colmater ou confiner une fuite à la jonction de deux tuyaux. Cependant, un tel dispositif peut trouver d'autres applications que le confinement d'une fuite d'un gaz au niveau d'une bride de jonction, par exemple, pour confiner une fuite au niveau d'un couvercle plein, d'une trappe de visite, ou encore les corps de vérin pneumatique ou hydraulique. Il trouve également une application pour le confinement de fuites apparaissant sur des équipements transportant des fluides, notamment lorsque le confinement est indispensable pour la sécurité ou la préservation de lʹenvironnement, par exemple et de manière non limitative, dans les domaines gaziers, chimiques, pétrochimiques, pharmaceutiques.

Lʹinvention concerne également un procédé de montage dʹun dispositif de confinement dʹune fuite dʹun gaz au niveau d'une zone de changement de diamètre extérieur d'un conduit de section circulaire d'un poste électrique à isolation gazeuse ou d'un disjoncteur à haute tension à isolation gazeuse, comprenant :
- une première bague de transition de diamètre destinée à être montée de façon étanche sur une première portion dudit conduit ;
- une deuxième bague de transition de diamètre destinée à être montée de façon étanche sur une deuxième portion dudit conduit présentant un diamètre extérieur différent de celui de ladite première portion de conduit, ladite deuxième bague de transition de diamètre présentant un diamètre extérieur sensiblement identique à celui de ladite première bague de transition de diamètre ;
- des moyens de capotage destinés à envelopper au moins partiellement ladite zone de changement de diamètre extérieur, configurés de sorte à pouvoir être montés de manière étanche sur le contour annulaire extérieur de ladite première bague de transition et sur le contour annulaire extérieur de ladite deuxième bague de transition ;
- des moyens d'étanchéification de la zone de montage entre ladite première bague de transition de diamètre et ladite première portion dudit conduit, de la zone de montage entre ladite deuxième bague et ladite deuxième portion dudit conduit et de la zone de montage entre lesdits moyens de capotage et lesdites bagues de transition de diamètre,
ledit procédé de montage comprenant les étapes suivantes :
- obtention desdites première et deuxième bagues de transition de diamètre;
- montage de ladite première bague de transition de diamètre sur ladite première portion dudit conduit et de ladite deuxième bague de transition de part sur ladite deuxième portion dudit conduit ;
- montage desdits moyens de capotage sur le contour annulaire extérieur de ladite première bague de transition et sur le contour annulaire extérieur de ladite deuxième bague de transition et de façon à envelopper au moins partiellement ladite zone de changement de diamètre extérieur;
- étanchéification de la zone de montage entre ladite première bague de transition de diamètre et ladite première portion dudit conduit, de la zone de montage entre ladite deuxième bague et ladite deuxième portion dudit conduit et de la zone de montage entre lesdits moyens de capotage et lesdites bagues de transition de diamètre.

Le montage du dispositif de confinement est ainsi particulièrement simple. Notamment, en utilisant un kit préfabriqué de bagues de transition de diamètre pour différents diamètres de tuyaux, il suffit de choisir les bagues de transition adaptées en fonction du diamètre extérieur de chaque tuyau, puis de monter les bagues de transition de diamètre choisies et les moyens de capotage de façon étanche pour confiner une fuite.

De façon avantageuse, ladite étanchéification d'au moins une desdites zone de montage est réalisée par collage ou par soudage.

### 5. Liste des figures

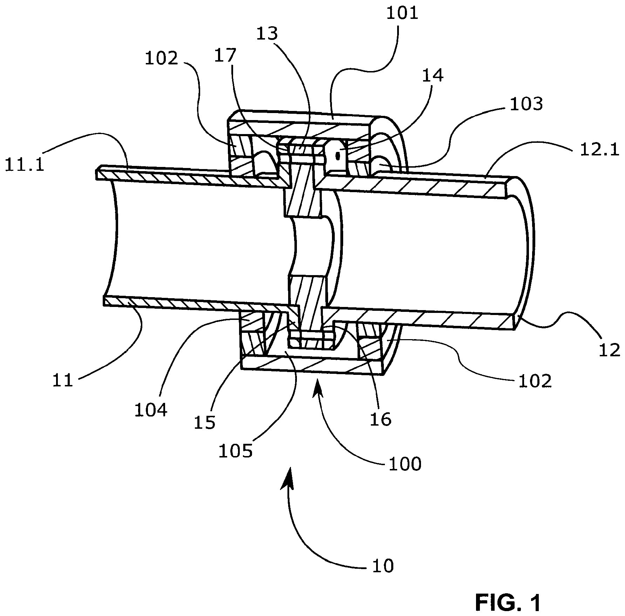

D'autres caractéristiques et avantages de lʹinvention apparaîtront plus clairement à la lecture de la description suivante de deux modes de réalisation de lʹinvention, donnés à titre de simples exemples illustratifs et non limitatifs, et de la figure 1 annexée, qui est une vue en coupe d'un mode de réalisation dʹun dispositif de confinement selon lʹinvention, monté autour d'une bride de jonction de deux tubes de diamètres différents.

### 6. Description détaillée de lʹinvention

### 6.1. Exemple de mode de réalisation de lʹinvention

En référence à la **figure 1****,** on a illustré un exemple d'un mode de réalisation dʹun dispositif de confinement 10 selon lʹinvention monté autour de la zone de jonction dʹun premier tuyau 11 avec un second tuyau 12 d'un conduit.

Les tubes 11 et 12 sont de diamètres extérieurs différents, coaxiaux et alignés à l'aide d'une bague de centrage 13 disposée dans la zone de changement de diamètre du conduit, à lʹinterface entre les tubes 11 et 12. Sur la figure 1, le premier tuyau 11 à un diamètre 11.1 inférieur au diamètre 12.1 du second tuyau 12. On constate également que lʹassemblage du premier tuyau 11 avec le second tuyau 12 est assuré par deux collets 14 et 15 faisant saillies des tubes 11, 12 en formant des plans de joints 16, 17 à lʹinterface avec la bague de centrage 13.

Le dispositif de confinement 10 comprend un tube de capotage 101 qui enveloppe un jeu de deux bagues de jonction 102 et des bagues de transition de diamètre extérieur 103 et 104. Pour permettre le montage du dispositif 10 autour dʹun conduit existant, le capot 101, les bagues de jonction 102 et les bagues dʹadaptation 103 et 104 sont en deux parties.

Lors de lʹinstallation du dispositif de confinement 10 sur les tuyaux 11, 12, les demi-bagues de transition de diamètre 103, 104 choisies pour leurs diamètres intérieurs sensiblement égaux aux diamètres extérieurs 11.1 et 12.1 des deux tuyaux 11 et 12 sont placées de part et d'autre de la fuite, au contact des collets 14, 15 de la bride et/ou du conduit, puis fixées par soudage à la surface des tuyaux 11, 12.

Ensuite, on monte les quatre demi-bagues de jonction 102 autour des bagues de transition de diamètre 103 et 104 et on les soudent aux bagues 103 et 104. Ainsi fixées, les bagues de jonction sont prêtes à recevoir l'élément tubulaire de capotage 101.

Enfin, on couvre lʹensemble des bagues par deux demi-coques formant l'élément de capotage 101 qui est fixé aux bagues de jonction 102 par soudage pour obtenir un dispositif de confinement 10 scellé de façon étanche et capable de résister à un liquide ou un gaz sous une pression de plusieurs bars. On constate que lʹenceinte 100 délimitée par le dispositif 10 confine une cavité 105 suffisamment grande pour contenir la zone de changement de diamètre du conduit et notamment les collets 14 et 15 qui font saillies à la surface des tuyaux 11 et 12. En cas de fuite dʹun liquide ou dʹun gaz au niveau dʹun organe de conduit, celles-ci sont avantageusement contenues à lʹintérieur du dispositif 10.

On notera que dans ce mode de réalisation particulier de l'invention, lʹensemble des pièces du dispositif de confinement 10 sont en métal.

### 6.2. Autre exemple de mode de réalisation de lʹinvention

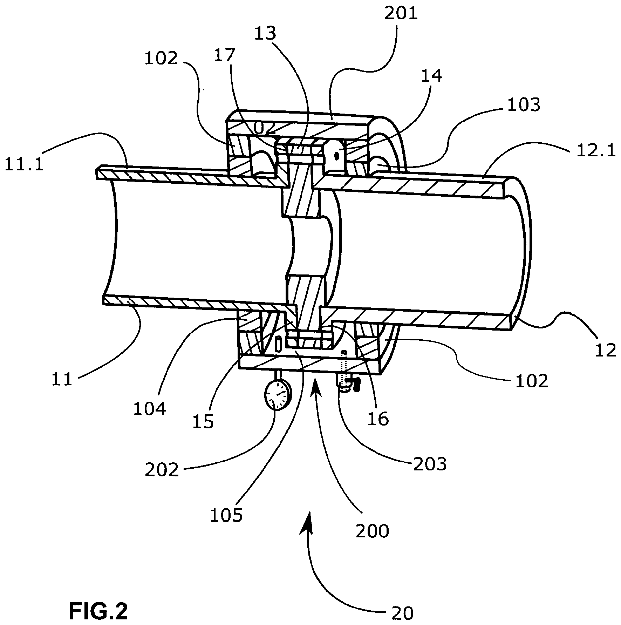

Sur la **figure 2****,** on a illustré un autre exemple d'un mode de réalisation dʹun dispositif de confinement 20 selon lʹinvention. Sur cette figure, les éléments identiques à ceux de la figure 1 portent les mêmes numéros de référence.

Comme on peut le voir sur la figure 2, le dispositif de confinement 20 est monté autour de la zone de jonction du premier tuyau 11 avec le second tuyau 12.

Dans ce mode de réalisation particulier de l'invention, l'élément de tubulaire de capotage 201 du dispositif 20 est traversé par un capteur de mesure 202 de la pression dans la cavité 105 et équipé dʹune vanne de vidange 203.

Ainsi, lorsque la pression relevée par le capteur 202 dépasse un seuil déterminé, un opérateur peut procéder à un dégazage. Pour effectuer cette opération de maintenance, lʹopérateur raccorde la vanne 203 à une bouteille ou une citerne et vidange la cavité 105.

### 6.3. Autres caractéristiques optionnelles et avantages de lʹinvention

Dans des variantes des modes de réalisation de lʹinvention détaillés ci-dessus, il peut également être prévu :
- dʹintégrer un capteur de mesure dans lʹun des éléments des moyens de capotage du dispositif de confinement pour mesurer la concentration de gaz et/ou le taux d'humidité. Ce capteur de mesure peut être associé à un module permettant de transmettre lors du franchissement dʹun seuil, ou de manière périodique ou continue, la mesure effectuée, via des moyens de transmission sans-fil (module WiFi, GSM, etc.) ou filaire (bus de terrain, bus industrielle, courant porteur sur un réseau électrique, etc.) à un équipement de supervision ;
- de placer la vanne de vidange permettant de récupérer le gaz s'accumulant dans la cavité sur l'une des bagues de transition de diamètre ou sur l'une des bagues de jonction ;
- d'assemblage les éléments du dispositif par boulonnage et/ou cerclage et d'assurer l'étanchéité dans les zones de montage à l'aide de joints toriques ;
- dʹutiliser tous matériaux dont la résistance mécanique, thermique, chimique, électrique est compatible avec lʹapplication du dispositif et notamment les alliages, les matériaux composites, les toiles enduites, les toiles composites, les thermoplastiques;
- dʹutiliser des bagues en trois parties ou plus.

## Revendications

1. Dispositif de confinement (10,20) dʹune fuite dʹun gaz au niveau d'une zone de changement de diamètre extérieur d'un conduit de section circulaire d'un poste électrique à isolation gazeuse ou d'un disjoncteur à haute tension à isolation gazeuse, comprenant :
- une première bague (103) de transition de diamètre destinée à être montée de façon étanche sur une première portion (11) dudit conduit ; des moyens des capotage; **caractérisé en ce qu'**il comprend:
- une deuxième bague (104) de transition de diamètre destinée à être montée de façon étanche sur une deuxième portion (12) dudit conduit présentant un diamètre extérieur (12.1) différent de celui (11.1) de ladite première portion (11) de conduit, ladite deuxième bague (104) de transition de diamètre présentant un diamètre extérieur sensiblement identique à celui de ladite première bague (103) de transition de diamètre ;
- les moyens de capotage destinés à envelopper au moins partiellement ladite zone de changement de diamètre extérieur, configurés de sorte à pouvoir être montés de manière étanche sur le contour annulaire extérieur de ladite première bague (103) de transition et sur le contour annulaire extérieur de ladite deuxième bague (104) de transition ;
- des moyens d'étanchéification de la zone de montage entre ladite première bague (103) de transition de diamètre et ladite première portion dudit conduit, de la zone de montage entre ladite deuxième bague (104) et ladite deuxième portion dudit conduit et de la zone de montage entre lesdits moyens de capotage et lesdites bagues (103 ;104) de transition de diamètre.

2. Dispositif de confinement selon la revendication 1, **caractérisé en ce que** lesdits moyens de capotage comprennent un élément tubulaire (101,201) et deux bagues de jonction (102), de diamètre intérieur sensiblement égal au diamètre extérieur desdites bagues (103;104) de transition de diamètre et de diamètre extérieur sensiblement égal au diamètre intérieur dudit élément tubulaire (101,201).

3. Dispositif de confinement selon la revendication 1, **caractérisé en ce que** lesdits moyens de capotage comprennent un élément tubulaire (101,201) de diamètre intérieur sensiblement égal au diamètre extérieur desdites bagues (103;104) de transition de diamètre.

4. Dispositif de confinement selon lʹune des revendications 2 ou 3, **caractérisé en ce que** ledit élément tubulaire (101,201) est formé de deux demi-coques demi-cylindriques sensiblement identiques.

5. Dispositif de confinement selon lʹune des revendications 1 à 4, **caractérisé en ce que** ladite première (103) et/ou ladite deuxième (104) bague de transition de diamètre sont formées de deux demi-bagues sensiblement identiques.

6. Dispositif de confinement selon la revendication 2, **caractérisée en ce qu'**au moins une desdites bagues de jonction (102) est formée de deux demi-bagues sensiblement identiques.

7. Dispositif de confinement selon lʹune des revendications 1 à 6, **caractérisé en ce qu**ʹil comprend une vanne de vidange (203) dudit gaz solidarisée auxdits moyens de capotage.

8. Dispositif de confinement selon lʹune des revendications 1 à 7, **caractérisé en ce que** lesdites bagues (103 ;104) de transition de diamètre et/ou lesdits moyens de capotage sont en matière métallique.

9. Procédé de montage dʹun dispositif de confinement (10,20) dʹune fuite dʹun gaz au niveau d'une zone de changement de diamètre extérieur d'un conduit de section circulaire d'un poste électrique à isolation gazeuse ou d'un disjoncteur à haute tension à isolation gazeuse selon la revendication 1, comprenant :
- une première bague (103) de transition de diamètre destinée à être montée de façon étanche sur une première portion (11) dudit conduit ;
- une deuxième bague (104) de transition de diamètre destinée à être montée de façon étanche sur une deuxième portion (12) dudit conduit présentant un diamètre extérieur (12.1) différent de celui (11.1) de ladite première portion (11) de conduit, ladite deuxième bague (104) de transition de diamètre présentant un diamètre extérieur sensiblement identique à celui de ladite première bague (103) de transition de diamètre ;
- des moyens de capotage destinés à envelopper au moins partiellement ladite zone de changement de diamètre extérieur, configurés de sorte à pouvoir être montés de manière étanche sur le contour annulaire extérieur de ladite première bague (103) de transition et sur le contour annulaire extérieur de ladite deuxième bague (104) de transition ;
- des moyens d'étanchéification de la zone de montage entre ladite première bague (103) de transition de diamètre et ladite première portion (11) dudit conduit, de la zone de montage entre ladite deuxième bague (104) et ladite deuxième portion (12) dudit conduit et de la zone de montage entre lesdits moyens de capotage et lesdites bagues (103 ;104) de transition de diamètre,
**caractérisé en ce qu**ʹil comprend les étapes suivantes :
- obtention desdites première (103) et deuxième (104) bagues de transition de diamètre;
- montage de ladite première bague (103) de transition de diamètre sur ladite première portion (11) dudit conduit et de ladite deuxième bague (104) de transition de diamètre sur ladite deuxième portion (12) dudit conduit ;
- montage desdits moyens de capotage sur le contour annulaire extérieur de ladite première bague (103) de transition et sur le contour annulaire extérieur de ladite deuxième bague (104) de transition et de façon à envelopper au moins partiellement ladite zone de changement de diamètre extérieur;
- étanchéification de la zone de montage entre ladite première bague (103) de transition de diamètre et ladite première portion (11) dudit conduit, de la zone de montage entre ladite deuxième bague (104) et ladite deuxième portion (12) dudit conduit et de la zone de montage entre lesdits moyens de capotage et lesdites bagues (103;104) de transition de diamètre.

10. Procédé de montage dʹun dispositif de confinement selon la revendication 9, **caractérisé en ce que** ladite étanchéification d'au moins une desdites zone de montage est réalisée par collage ou par soudage.

## Patentansprüche

1. Vorrichtung zur Eindämmung (10, 20) eines Lecks eines Gases im Bereich einer Region einer Veränderung des Außendurchmessers eines Rohres mit kreisförmigem Querschnitt einer gasisolierten elektrischen Station oder eines gasisolierten Hochspannungsschalters, umfassend:
- einen ersten Durchmesser-Übergangsring (103), der bestimmt ist, dicht auf einem ersten Abschnitt (11) des Rohres angebracht zu sein;
- Abdeckmittel,
**dadurch gekennzeichnet, dass** sie umfasst:
- einen zweiten Durchmesser-Übergangsring (104), der bestimmt ist, dicht auf einem zweiten Abschnitt (12) des Rohres angebracht zu sein, der einen Außendurchmesser (12.1) aufweist, der sich von dem (11.1) des ersten Rohrabschnitts (11) unterscheidet, wobei der zweite Durchmesser-Übergangsring (104) einen Außendurchmesser aufweist, der etwa mit dem des ersten Durchmesser-Übergangsrings (103) identisch ist, wobei die Abdeckmittel, die bestimmt sind, die Region einer Veränderung des Außendurchmessers mindestens teilweise abzudecken, derart ausgelegt sind, dass sie dicht auf der äußeren ringförmigen Kontur des ersten Übergangsrings (103) und auf der äußeren ringförmigen Kontur des zweiten Übergangsrings (104) anbringbar sind;
- Abdichtungsmittel der Montageregion zwischen dem ersten Durchmesser-Übergangsring (103) und dem ersten Abschnitt des Rohres, der Montageregion zwischen dem zweiten Ring (104) und dem zweiten Abschnitt des Rohres und der Montageregion zwischen den Abdeckmitteln und den Durchmesser-Übergangsringen (103; 104).

2. Eindämmungsvorrichtung nach Anspruch 1, **dadurch gekennzeichnet, dass** die Abdeckmittel ein rohrförmiges Element (101, 201) und zwei Verbindungsringe (102) mit einem Innendurchmesser umfassen, der etwa gleich dem Außendurchmesser der Durchmesser-Übergangsringe (103; 104) ist, und mit einem Außendurchmesser, der etwa gleich dem Innendurchmesser des rohrförmigen Elements (101, 201) ist.

3. Eindämmungsvorrichtung nach Anspruch 1, **dadurch gekennzeichnet, dass** die Abdeckmittel ein rohrförmiges Element (101, 201) mit einem Innendurchmesser umfassen, der etwa gleich dem Außendurchmesser der Durchmesser-Übergangsringe (103; 104) ist.

4. Eindämmungsvorrichtung nach einem der Ansprüche 2 oder 3, **dadurch gekennzeichnet, dass** das rohrförmige Element (101, 201) von zwei etwa identischen halbzylindrischen Halbschalen gebildet ist.

5. Eindämmungsvorrichtung nach einem der Ansprüche 1 bis 4, **dadurch gekennzeichnet, dass** der erste (103) und/oder der zweite (104) Durchmesser-Übergangsring von zwei etwa identischen Halbringen gebildet sind.

6. Eindämmungsvorrichtung nach Anspruch 2, **dadurch gekennzeichnet, dass** mindestens einer der Verbindungsringe (102) von zwei etwa identischen Halbringen gebildet ist.

7. Eindämmungsvorrichtung nach einem der Ansprüche 1 bis 6, **dadurch gekennzeichnet, dass** sie ein Ablassventil (203) des Gases umfasst, das mit den Abdeckmitteln fest verbunden ist.

8. Eindämmungsvorrichtung nach einem der Ansprüche 1 bis 7, **dadurch gekennzeichnet, dass** die Durchmesser-Übergangsringe (103; 104) und/oder die Abdeckmittel aus metallischem Material sind.

9. Verfahren zur Montage einer Eindämmungsvorrichtung (10, 20) eines Lecks eines Gases im Bereich einer Region einer Veränderung des Außendurchmesser eines Rohres mit kreisförmigem Querschnitt einer gasisolierten elektrischen Station oder eines gasisolierten Hochspannungsschalters nach Anspruch 1, umfassend:
- einen ersten Durchmesser-Übergangsring (103), der bestimmt ist, dicht auf einem ersten Abschnitt (11) des Rohres angebracht zu sein;
- einen zweiten Durchmesser-Übergangsring (104), der bestimmt ist, dicht auf einem zweiten Abschnitt (12) des Rohres angebracht zu sein, der einen Außendurchmesser (12.1) aufweist, der sich von dem (11.1) des ersten Rohrabschnitts (11) unterscheidet, wobei der zweite Durchmesser-Übergangsring (104) einen Außendurchmesser aufweist, der etwa mit dem des Durchmesser-Übergangsrings (103) identisch ist;
- Abdeckmittel, die dazu bestimmt sind, die Region einer Veränderung des Außendurchmessers mindestens teilweise abzudecken, die derart ausgelegt sind, dass sie dicht auf der äußeren ringförmigen Kontur des ersten Übergangsrings (103) und auf der äußeren ringförmigen Kontur des zweiten Übergangsrings (104) anbringbar sind;
- Abdichtungsmittel der Montageregion zwischen dem Durchmesser-Übergangsring (103) und dem ersten Abschnitt (11) des Rohres, der Montageregion zwischen dem zweiten Ring (104) und dem zweiten Abschnitt (12) des Rohres und der Montageregion zwischen den Abdeckmitteln und den Durchmesser-Übergangsringen (103; 104),
**dadurch gekennzeichnet, dass** es die folgenden Schritte umfasst:
- Erhalten des ersten (103) und zweiten (104) Durchmesser-Übergangsrings;
- Anbringen des ersten Durchmesser-Übergangsrings (103) auf dem ersten Abschnitt (11) des Rohres und des zweiten Durchmesser-Übergangsrings (104) auf dem zweiten Abschnitt (12) des Rohres;
- Anbringen der Abdeckmittel auf der äußeren ringförmigen Kontur des ersten Übergangsrings (103) und auf der äußeren ringförmigen Kontur des zweiten Übergangsrings (104) und derart, dass die Region einer Veränderung des Außendurchmessers mindestens teilweise abgedeckt wird;
- Abdichten der Montageregion zwischen dem ersten Durchmesser-Übergangsring (103) und dem ersten Abschnitt (11) des Rohres, der Montageregion zwischen dem zweiten Ring (104) und dem zweiten Abschnitt (12) des Rohres und der Montageregion zwischen den Abdeckmitteln und den Durchmesser-Übergangsringen (103; 104).

10. Montageverfahren einer Eindämmungsvorrichtung nach Anspruch 9, **dadurch gekennzeichnet, dass** die Abdichtung von mindestens einer der Montageregionen durch Kleben oder durch Schweißen durchgeführt wird.

## Claims

1. A gas leakage containment device (10, 20) at an outer diameter change area of a circular section duct of a gas insulated electrical substation or a gas insulated high voltage circuit breaker, comprising:
- a first diameter transition ring (103) to be sealingly mounted on a first portion (11) of said conduit;
- covering means,
**characterised in that** it comprises:
- a second diameter transition ring (104) for sealingly mounting on a second portion (12) of said conduit having an outer diameter (12.1) different from that (11.1) of said first conduit portion (11), said second diameter transition ring (104) having an outer diameter substantially identical to that of said first diameter transition ring (103), the covering means for at least partially enclosing said outer diameter change area being configured so as to be sealably mountable on the outer annular contour of said first transition ring (103) and on the outer annular contour of said second transition ring (104);
- means for sealing the mounting area between said first diameter transition ring (103) and said first portion of said conduit, the mounting area between said second ring (104) and said second portion of said conduit and the mounting area between said covering means and said diameter transition rings (103-104).

2. The containment device according to claim 1, **characterised in that** said containment means comprise a tubular element (101, 201) and two joining rings (102), of internal diameter substantially equal to the external diameter of said diameter transition rings (103; 104) and of external diameter substantially equal to the internal diameter of said tubular element (101, 201).

3. The containment device according to claim 1, **characterised in that** said covering means comprise a tubular member (101, 201) of internal diameter substantially equal to the external diameter of said diameter transition rings (103; 104).

4. The containment device according to any one of claims 2 or 3, **characterised in that** said tubular element (101, 201) is formed of two substantially identical semi-cylindrical half-shells.

5. The containment device according to any of claims 1 to 4, **characterised in that** said first (103) and/or second (104) diameter transition ring are formed of two substantially identical half-rings.

6. The containment device according to claim 2, **characterised in that** at least one of said joining rings (102) is formed of two substantially identical half-rings.

7. The containment device according to one of claims 1 to 6, **characterised in that** it comprises a valve (203) for draining gas which is integral with the said covering means.

8. The containment device according to any of claims 1 to 7, **characterised in that** said diameter transition rings (103-104) and/or said covering means are of metallic material.

9. A method of mounting a gas leakage containment device (10,20) at an outer diameter changeover area of a circular cross-section duct of a gas-insulated electrical substation or a gas-insulated high-voltage circuit breaker according to claim 1, comprising:
- a first diameter transition ring (103) to be sealingly mounted on a first portion (11) of said conduit;
- a second diameter transition ring (104) to be sealingly mounted on a second portion (12) of said conduit having an outer diameter (12.1) different from that (11.1) of said first conduit portion (11), said second diameter transition ring (104) having an outer diameter substantially identical to that of said first diameter transition ring (103);
- covering means for at least partially enclosing said outer diameter change area, configured to be sealingly mounted on the outer annular contour of said first transition ring (103) and on the outer annular contour of said second transition ring (104);
- means for sealing the mounting area between said first diameter transition ring (103) and said first portion (11) of said conduit, the mounting area between said second ring (104) and said second portion (12) of said conduit and the mounting area between said covering means and said diameter transition rings (103:104),
**characterised in that** it comprises the following steps- obtaining said first (103) and second (104) diameter transition rings;
- mounting said first diameter transition ring (103) on said first portion (11) of said conduit and said second diameter transition ring (104) on said second portion (12) of said conduit;
- mounting said shroud means on the outer annular contour of said first transition ring (103) and on the outer annular contour of said second transition ring (104) and so as to at least partially envelop said outer diameter change area;
- sealing the mounting area between said first diameter transition ring (103) and said first portion (11) of said conduit, the mounting area between said second ring (104) and said second portion (12) of said conduit and the mounting area between said covering means and said diameter transition rings (103;104).

10. The method of mounting a containment device according to claim 9, **characterised in that** said sealing of at least one of said mounting areas is performed by gluing or welding.
